# EUROPÄISCHE PATENTSCHRIFT

(11) **EP 3 127 415 B1**
(45) Veröffentlichungstag und Bekanntmachung des Hinweises auf die Patenterteilung: **07.09.2022**
(21) Anmeldenummer: 16180557.7
(22) Anmeldetag: 21.07.2016
(51) Int. Cl.: A01C 7/20, A01C 7/10, A01C 7/04

(54) **VERFAHREN ZUR DOSIERUNG VON KÖRNIGEM GUT UND STEUERSYSTEM FÜR EIN DOSIERAGGREGAT EINER VERTEIL- UND/ODER SÄVORRICHTUNG**
METHOD FOR DOSING GRANULAR GOODS, AND CONTROL SYSTEM FOR A DOSING UNIT OF A DISTRIBUTING AND/OR SOWING DEVICE
PROCEDE DE DOSAGE DE SEMENCES ET SYSTEME DE COMMANDE D'UN APPAREIL DE DOSAGE D'UN DISPOSITIF D'EPANDAGE ET/OU DE SEMIS

(30) Priorität: 05.08.2015 DE 102015112912
(43) Veröffentlichungstag der Anmeldung: 08.02.2017
(73) Patentinhaber: Horsch Maschinen GmbH, 92421 Schwandorf (DE)
(72) Erfinder: HASELHOFF, Alexander, 92421 Schwandorf (DE)
(74) Vertreter: Benninger, Johannes

(56) Entgegenhaltungen:
- EP-A2- 2 225 928
- US-A1- 2009 000 533
- US-A1- 2012 316 736

## Beschreibung

Die vorliegende Erfindung betrifft ein Verfahren zur Dosierung von körnigem Gut, insbesondere im Zusammenhang mit einem Verteil- und/oder Säverfahren mit den Merkmalen des unabhängigen Verfahrensanspruchs 1. Die Erfindung betrifft zudem ein Steuersystem für wenigstens ein Dosieraggregat einer Verteil- und/oder Sävorrichtung mit den Merkmalen des unabhängigen Anspruchs 8.

Aus dem Stand der Technik sind bereits mehrere Ansätze bekannt, die bei einer Drillsaat eine verbesserte Konstanz der Kornabstände realisieren können, um sich damit den Bedingungen einer Einzelkornsaat zumindest anzunähern. Entsprechende Ansätze finden sich in der WO 2012/167372 A1, in der US 6 564 730 B2 sowie in der EP 0 963 690 A1.

In jüngerer Zeit wurden stark verbesserte Systeme entwickelt, bei denen sich bei volumendosierenden Sämaschinen, die normalerweise zur Drillsaat vorgesehen sind, mittels luftdurchströmten Dosieraggregaten eine bessere Kornvereinzelung bzw. eine Einzelkornsaat mit zufriedenstellender Genauigkeit erzielen lässt. Diese Systeme finden sich in unterschiedlichen Ausführungsvarianten in der DE 10 2012 105 048 A1 oder in der DE 10 2013 110 641 A1, die jeweils Varianten zur Steuerung von Einzelkorndosieraggregaten offenbaren. Die bekannten Systeme beschäftigen sich jeweils mit der Steuerung und Regelung einer Ausbringmenge während einer Feldfahrt, d.h. es wird jeweils versucht, auf Basis eines Drehmoments oder über den Füllstand die Geschwindigkeit einer Dosierscheibe zu verringern oder zu erhöhen, um somit jeweils die Längsverteilung zu optimieren.

Durch US 2009/0000533 A1 ist eine Sämaschine offenbart, bei welcher die Drehzahl der Förderscheibe mechanisch bzw. in Abhängigkeit vom Durchmesser eines Zahnrades auf einen bestimmten Wert reduziert werden kann. Darüber hinaus werden Regler beschrieben, welche die Reiheneinheiten unabhängig voneinander beispielsweise bei einem Vorgewende an- oder abschalten können.

Bei Vorgewendefahrten am Feldrand gelten jedoch eigene Gesetzmäßigkeiten, die mit einem normalen Betriebsmodus, wie er für die reguläre Feldfahrt sinnvoll ist, nicht abzubilden sind. So ist es insbesondere nicht sinnvoll, am Vorgewende mit unveränderter Kornzahl auszusäen und/oder überhaupt auszusäen, sondern ggf. stattdessen eine abschließende Querfahrt entlang des Feldrandes durchzuführen, nachdem das übrige Feld bestellt ist. Während der Vorgewendefahrt sind unterschiedliche Betriebsmodi wünschenswert, die mit den bisher bekannten Regelungs- und Steuerungsverfahren für das neu entwickelte Dosieraggregat nicht sinnvoll vorgegeben werden können.

Um diese Unzulänglichkeiten zu beseitigen, liegt das Ziel der vorliegenden Erfindung darin, eine optimierte Vorgewendesteuerung für die genannten Einzelkorndosieraggregate anzubieten, die bspw. eine Restmengenentleerung, eine Reinigung der Dosieraggregate von Fremdstoffen, aber auch ein möglichst störungsfreies Einsetzen der Maschine nach dem Vorgewende ermöglichen.

Das genannte Ziel wird mit den Gegenständen der unabhängigen Ansprüche erreicht. Merkmale vorteilhafter Weiterbildungen der Erfindung ergeben sich aus den jeweils davon abhängigen Ansprüchen. So schlägt die vorliegende Erfindung zur Erreichung des Ziels ein Verfahren zur Dosierung von körnigem Gut vor, das insbesondere im Zusammenhang mit einem Verteil- und/oder Säverfahren stehen kann, bei dem das mittels einer Luftströmung beförderte körnige Gut, durch wenigstens ein in einer von mehreren Saatleitungen sich befindlichen Dosieraggregats vereinzelt und/oder vergleichmäßigt wird und vorzugsweise mit zumindest einem Teil der Luftströmung mit annähernd gleichmäßigen Kornabständen an eine Ausgangsleitung oder ein Saatrohr bzw. ein Sä- oder Düngerschar weitergeleitet wird. Im Dosieraggregat ist ein durch elektromotorischen, hydraulischen oder sonstigen Antrieb rotierendes Förder- und/oder Dosier- und/oder Vereinzelungselement angeordnet, das sich in Kontakt mit mindestens einem Teil der Luftströmung sowie mit dem durch das Dosieraggregat geleiteten körnigen Gut befindet. Eine Drehzahl des rotierenden Förder-, Dosier- und/oder Vereinzelungselements kann erfindungsgemäß für Reinigungszwecke und/oder im Zusammenhang mit einer Vorgewendesteuerung und/oder beim Starten oder Beenden eines Sä- oder Ausbringvorganges zumindest temporär gegenüber einer regulären Betriebsdrehzahl, die während einer Ausbringfahrt eingestellt ist, reduziert oder erhöht werden. Um den jeweils gewünschten Effekt zu erreichen, ist häufig eine geringfügige Drehzahlerhöhung oder -reduzierung nicht ausreichend, so dass erfindungsgemäß die Drehzahl für die genannten Zwecke in dem nicht regulären Betriebsmodus um wenigsten fünf, vorzugsweise um ca. fünfzehn, ggf. auch um dreißig Prozent oder mehr erhöht oder reduziert werden kann. Die Drehzahlanpassung lässt sich durch ein geeignetes Steuerprogramm in gewünschter Weise anpassen, da der elektromotorisch, hydraulisch oder auf andere Weise betriebene Antriebsmotor für die Rotation des Förder-, Dosier- und/oder Vereinzelungselements schnell auf geänderte Drehzahlanforderungen reagieren kann. Das solchermaßen definierte Dosieraggregat befindet sich bei typischen Sämaschinen oder Düngerstreuern in jeder Saatleitung zwischen einem pneumatischen Hauptverteiler und dem jeweiligen Säschar und dient bei Drillmaschinen und pneumatischen Ausbring- und Verteilvorrichtungen der Vergleichmäßigung der Kornfolge, idealerweise der Erzeugung sehr regelmäßiger Kornabstände bzw. der Realisierung einer Einzelkornsaat.

Bei dem erfindungsgemäßen Verfahren kann es gemäß einer Ausführungsvariante insbesondere vorteilhaft sein, die Drehzahl des rotierenden Förder-, Dosier- und/oder Vereinzelungselements im Zusammenhang mit einer Vorgewendesteuerung zumindest temporär um wenigstens zehn bis zwanzig Prozent gegenüber einer regulären Betriebsdrehzahl, die während einer Ausbringfahrt eingestellt ist, zu erhöhen. Eine solche Drehzahlerhöhung kann besonders während der Wendefahrten, bei denen keine Körner ausgebracht werden sollen, sinnvoll sein. Diese sog. Vorgewendefahrten sind bei vielen Säverfahren problematisch, wenn es nicht gelingt die Sämaschine kurzzeitig zu deaktivieren, da das überzählige Saatgut oder der überzählige Dünger, der im Bereich des Vorgewendes ausgebracht wird, verloren ist. Die Drehzahlerhöhung um zehn bis zwanzig Prozent oder mehr kann jedoch gleichermaßen am Ende oder gegen Ende eines Sä- oder Ausbringvorganges sinnvoll sein, um die Maschine auf diese Weise schneller zu entleeren.

So kann es insbesondere auch sinnvoll sein, die Drehzahl des rotierenden Förder-, Dosier- und/oder Vereinzelungselements zumindest kurzzeitig auf eine Maximaldrehzahl von bspw. ca. 2500 min⁻¹ oder bis zu ca. 3000 min⁻¹ zu bringen, um auf diese Weise das Dosieraggregat bzw. vorgeordnete Komponenten der Sä- oder Ausbringmaschine am Vorgewende oder am Ende der Arbeit zu entleeren.

Die Drehzahlbereiche eines solchen Dosieraggregats, wie oben definiert, können typischerweise zwischen Null und einer Maximaldrehzahl von ca. 3000 min⁻¹ liegen. Dabei bilden während eines Ausbringvorganges Drehzahlen zwischen ca. 1200 min⁻¹ und ca. 1800 min⁻¹ sinnvolle Werte, während Drehzahlen von mehr als ca. 2500 min⁻¹ dazu geeignet sind, die auszubringenden Körner bzw. einzelne der auszubringenden Körner zu beschädigen.

Erfindungsgemäß wird vorgesehen, mittels der kurzzeitigen Erhöhung der Drehzahl des rotierenden Förder-, Dosier- und/oder Vereinzelungselements Restmengen an körnigem Gut und/oder an Fremdstoffen und/oder Verunreinigungen aus dem Dosieraggregat zu entfernen bzw. dieses zu entleeren. Diese Drehzahlerhöhung erfolgt sinnvollerweise am Ende der Arbeit oder auch zum Zwecke einer Restmengenentleerung am Vorgewende. Die erwähnte Drehzahlerhöhung dient in erster Linie der Restmengenentleerung am Vorgewende oder am Ende der Arbeit. Um zu vermeiden, dass Körner bzw. Saatgut am Vorgewende oder am Ende der Arbeit noch dosiert werden, ist eine Restmengenentleerung nötig. Dies wird realisiert, indem nach dem Ausheben bzw. während des Aushebens bzw. unmittelbar vor dem Ausheben der Maschine die Drehzahl kurzzeitig auf die Maximaldrehzahl erhöht wird; dadurch werden die sich im Umlauf befindlichen Körner entsprechend vereinzelt bzw. ausgebracht.

Zur Realisierung wenigstens eines weiteren Betriebsmodus kann das Verfahren auch vorsehen, die Drehzahl des rotierenden Förder-, Dosier- und/oder Vereinzelungselements im Zusammenhang mit einem Arbeitsbeginn und/oder einer Weiterfahrt nach Passieren eines Vorgewendes zumindest temporär um wenigstens zehn bis fünfzehn Prozent gegenüber einer regulären Betriebsdrehzahl, die während einer Ausbringfahrt eingestellt ist, zu erhöhen. Beim Zuführen von Saatgut nach dem Vorgewende oder beim Neustart eines Sävorganges ist das plötzlich in größeren Mengen dem Dosieraggregat zugeführte Saatgut (bzw. der Dünger) dazu geeignet, die Drehzahl des rotierenden und motorisch angetriebenen Förder-, Dosier- und/oder Vereinzelungselements einbrechen oder das Drehmoment stark ansteigen zu lassen. Die starke Abbremsung und/oder erhöhte Stromaufnahme des vorzugsweise als Antriebsmotor eingesetzten Elektromotors kann hierbei die Gefahr einer Beschädigung mit sich bringen. Um dies zu vermeiden, wird unmittelbar nach dem Vorgewende die Drehzahl der Dosierscheibe auf ein bestimmtes Maß erhöht, um die auftretenden Stromspitzen zu vermeiden. Normalerweise ist es bei dieser Verfahrensvariante sinnvoll, nach der kurzzeitigen Erhöhung der Drehzahl nach dem Arbeitsbeginn oder nach dem Passieren des Vorgewendes die Drehzahl des rotierenden Förder-, Dosier- und/oder Vereinzelungselements wieder auf eine Solldrehzahl bzw. die reguläre Betriebsdrehzahl für eine Ausbringfahrt zu reduzieren. Ebenso kann die Drehzahl auch auf Basis des Füllgrades der Dosieraggregate nach dem Vorgewende oder dem Einsetzen wieder verringert werden. Diese Verfahrensvariante ist besonders für das Einsetzen der Maschine nach dem Vorgewende oder zu Arbeitsbeginn wichtig. Die Dosierscheibe wird bspw. mittels eines Elektromotors angetrieben. Wenn nach dem Vorgewende das Saatgut oder der Dünger in das Einzelkorndosieraggregat zugeführt wird, kann ggf. ein erhöhtes Drehmoment bzw. eine erhöhte Stromaufnahme des Elektromotors ausgelöst werden und diesen ggf. beschädigen. Um dies zu vermeiden, wird unmittelbar nach dem Vorgewende oder bei Arbeitsbeginn die Drehzahl der Dosierscheibe auf ein bestimmtes Maß erhöht, um somit auftretende Stromspitzen zu vermeiden. Nach einer bestimmten Zeit oder nach Ermittlung eines bestimmten Füllgrades des Dosieraggregats kann die Drehzahl wieder auf eine Solldrehzahl von bspw. ca. 1200 min⁻¹ bis bspw. ca. 1800 min⁻¹ je nach auszubringendem Stoff bzw. auf die reguläre Betriebsdrehzahl für eine normale Ausbringfahrt verringert werden.

Zur Realisierung wenigstens eines weiteren Betriebsmodus kann das Verfahren darüber hinaus vorsehen, die Drehzahl des rotierenden Förder-, Dosier- und/oder Vereinzelungselements für Reinigungszwecke und/oder im Zusammenhang mit einer Vorgewendesteuerung während einer Vorgewendefahrt zumindest temporär um wenigstens zwanzig Prozent gegenüber einer regulären Betriebsdrehzahl, die während einer Ausbringfahrt eingestellt ist, zu reduzieren. Eine solche Drehzahlreduzierung dient der Reinigung des Dosieraggregats, insbesondere der Beseitigung von Fremdstoffen. Ggf. kann auch eine Reduzierung der Drehzahl um mehr als zwanzig Prozent sinnvoll sein. Hierbei wird die Drehzahl der Dosierscheibe während einer Fahrt am Vorgewende auf eine bestimmte Drehzahl reduziert, wodurch sich die Zentrifugalkraft im Dosieraggregat verringert, was Fremdstoffe und leichte Verunreinigungen leichter austreten lässt. Als reduzierte Drehzahl für solche Fahrsituationen hat sich eine Drehzahl von ca. 300 min⁻¹ als besonders geeignet herausgestellt. Die Drehzahl kann ggf. noch niedriger gewählt werden und auf Werte von bis zu ca. 100 min⁻¹ abgesenkt werden.

So kann eine Variante des Verfahrens vorsehen, dass die Drehzahl bzw. die Zentrifugalkraft des rotierenden Förder-, Dosier- und/oder Vereinzelungselements soweit verringert wird, dass diese einen Wert annimmt, dass Fremdkörper wie Schmutzpartikel, sog. Bruchkorn o. dgl. Fremdstoffe über die Vereinzelungsöffnungen der Dosierscheibe vereinzelt und somit aus dem Einzelkorndosieraggregat ausgeschieden werden.

Wie es auch nachfolgend anhand mehrerer Ausführungsvarianten unter Bezugnahme auf die Zeichnungen noch näher erläutert wird, ermöglicht das Verfahren verschiedene Varianten und Betriebsmodi, die sich mithilfe einer gezielten Drehzahlregelung bzw. -steuerung des in der Saatleitung kurz vor dem Säschar befindlichen Dosieraggregat bzw. der in den jeweiligen Saatleitungen befindlichen Dosieraggregate umsetzen lassen. Da in jedem der Dosieraggregate ein Förder- und/oder Dosier- und/oder Vereinzelungselement rotiert, dem jeweils ein in seiner Drehzahl regulierbarer elektromotorischer oder hydraulischer Antrieb zugeordnet ist, können je nach Bedarf unterschiedliche Betriebsmodi eingestellt werden, indem eine Drehzahl des rotierenden Förder-, Dosier- und/oder Vereinzelungselements in gewünschter Weise reguliert wird. So ist die Drehzahl des rotierenden Förder-, Dosier- und/oder Vereinzelungselements für Reinigungszwecke, im Zusammenhang mit einer Vorgewendesteuerung sowie auch beim Starten oder Beenden eines Sä- oder Ausbringvorganges zumindest temporär gegenüber einer regulären Betriebsdrehzahl, die während einer Ausbringfahrt eingestellt ist, reduzierbar oder steigerbar.

So kann ein erster Betriebsmodus bzw. ein Reinigungsmodus insbesondere der Beseitigung von Fremdstoffen aus dem Dosieraggregat dienen. Während eines normalen Säbetriebs wird das rotierende Förder-, Dosier- und/oder Vereinzelungselement mit einer Solldrehzahl betrieben, bspw. mit einer Drehzahl im Bereich von ca. 1200 min⁻¹ bis ca. 1800 min⁻¹, bei der bezogen auf eine bestimmte Fahrgeschwindigkeit der Sämaschine eine gewünschte Kornzahl je gegebener Strecke ausgebracht wird. Die Körner werden hierbei in weitgehend konstanten Abständen ausgebracht, da es sich um einen Einzelkornsävorgang bzw. um einen Sävorgang handelt, der einer Einzelkornsaat sehr weitgehend angenähert ist. Fährt bzw. bewegt sich die Sämaschine über einem Vorgewende, so wird die Drehzahl des rotierenden Förder-, Dosier- und/oder Vereinzelungselements auf einen geringeren Wert von bspw. ca. 300 min⁻¹ reduziert, wodurch sich im Inneren des Dosieraggregats die auf die Körner sowie auf Fremdstoffe, Schmutzpartikel, Bruchkörner etc. wirkenden Zentrifugalkräfte reduzieren. Die Drehzahl wird soweit verringert, dass die Zentrifugalkräfte einen Wert annehmen, dass die unerwünschten Fremdstoffe über die Vereinzelungsöffnungen der Dosierscheibe vereinzelt und somit zumindest weitestgehend aus dem Einzelkorndosieraggregat ausgeschieden werden. Dieser Reinigungsmodus kann insbesondere während einer Vorgewendefahrt, bei der Annäherung an ein Vorgewende, aber auch am Ende eines Sävorganges durchgeführt werden.

Ein zweiter Betriebsmodus bzw. ein Modus nach einer Vorgewendefahrt dient der Vermeidung von Störungen und/oder von Beschädigungen des Aggregats beim Einsetzen der Maschine, weshalb hierbei die Drehzahl der rotierenden Dosierscheiben zumindest kurzzeitig deutlich erhöht wird. Da die rotierende Dosierscheibe jedes Dosieraggregats normalerweise mittels Elektromotor angetrieben wird, kann die plötzliche Zuführung größerer Mengen von Saatgut oder Dünger, wie sie insbesondere nach einer Vorgewendefahrt stattfindet, zu einer erhöhten Stromaufnahme durch das plötzliche Abbremsen des Antriebsmotors führen, was unter ungünstigen Umständen zu einer Beschädigung des Antriebsmotors führen kann. Um dies zu vermeiden, wird in diesem zweiten Betriebsmodus, der normalerweise unmittelbar nach der Vorgewendefahrt, aber auch bei Arbeitsbeginn, d.h. beim Starten des Sävorganges sinnvoll anzuwenden ist, die Drehzahl der Dosierscheibe vorbeugend um ein bestimmtes Maß erhöht, um somit auftretende Stromspitzen bzw. einen Einbruch der Drehzahl zu vermeiden. Nach einer bestimmten Zeit, wenn das erhöhte Kornaufkommen verarbeitet ist, kann die Drehzahl wieder auf die Solldrehzahl verringert werden.

Die Erhöhung der Drehzahl in diesem zweiten Betriebsmodus kann insbesondere mindestens fünf Prozent, normalerweise jedoch etwa mindestens fünfzehn bis dreißig Prozent gegenüber der normalen Betriebsdrehzahl betragen, ggf. auch etwas mehr oder etwas weniger. Wenn deshalb zuvor davon die Rede war, dass das rotierende Förder-, Dosier- und/oder Vereinzelungselement während eines normalen Säbetriebs mit einer Solldrehzahl von ca. 1200 min⁻¹ betrieben wird, so kann die Drehzahl im zweiten Betriebsmodus (Ende der Vorgewendefahrt oder Beginn des Sävorganges) auf einen je nach Betriebssituation sinnvollen Wert von etwa 1380 min⁻¹ (+ 15%) bis etwa 1560 min⁻¹ (+ 30%) angehoben werden. Wenn dagegen das rotierende Förder-, Dosier- und/oder Vereinzelungselement während eines normalen Säbetriebs mit einer Solldrehzahl von ca. 1500 min⁻¹ betrieben wird, so kann die Drehzahl im zweiten Betriebsmodus (Ende der Vorgewendefahrt oder Beginn des Sävorganges) auf einen je nach Betriebssituation sinnvollen Wert von etwa 1725 min⁻¹ (+ 15%) bis etwa 1950 min⁻¹ (+ 30%) angehoben werden. Wenn das rotierende Förder-, Dosier- und/oder Vereinzelungselement während eines normalen Säbetriebs allerdings mit einer Solldrehzahl von ca. 1800 min⁻¹ betrieben wird, so kann die Drehzahl im zweiten Betriebsmodus (Ende der Vorgewendefahrt oder Beginn des Sävorganges) auf einen je nach Betriebssituation sinnvollen Wert von etwa 2070 min⁻¹ (+ 15%) bis etwa 2340 min⁻¹ (+ 30%) angehoben werden. Selbstverständlich sind auch beliebige Zwischenwerte sinnvoll bzw. möglich.

Ein dritter Betriebsmodus kann insbesondere einer Restmengenentleerung des Dosieraggregats am Vorgewende oder am Ende eines Sävorganges dienen. Um zu vermeiden, dass Körner bzw. Saatgut am Vorgewende oder am Ende der Arbeit noch dosiert werden, ist eine rechtzeitige Restmengenentleerung sinnvoll bzw. auch notwendig. Diese Restmengenentleerung kann dadurch realisiert werden, dass nach dem Ausheben bzw. während des Aushebens der Maschine, d.h. nach dem eigentlichen Sävorgang, die Drehzahl des rotierenden Förder-, Dosier- und/oder Vereinzelungselements kurzzeitig auf eine vom Antriebsmotor realisierbare Maximaldrehzahl erhöht wird, wodurch die sich im Umlauf befindlichen Körner entsprechend vereinzelt bzw. ausgebracht werden können. Die Drehzahl kann hierbei bspw. kurzzeitig auf eine Maximaldrehzahl, die bspw. ca. 2500 min⁻¹ bis etwa 2800 min⁻¹ oder etwas mehr betragen kann, erhöht werden.

Zur Erreichung des oben genannten Ziels schlägt die Erfindung neben dem in verschiedenen Ausführungsvarianten dargestellten Verfahren ein Steuersystem für wenigstens ein Dosieraggregat einer Verteil- und/oder Sävorrichtung vor, das in wenigstens einer von mehreren Saatleitungen zur Dosierung, Vereinzelung und/oder Vergleichmäßigung von körnigem Gut angeordnet ist und das bspw. mit einer das körnige Gut transportierenden Luftströmung beaufschlagt und zumindest von einem Teil der Luftströmung durchströmt wird. Im Dosieraggregat ist ein durch elektromotorischen, hydraulischen oder auf andere Weise angetriebenes rotierendes Förder- und/oder Dosier- und/oder Vereinzelungselement angeordnet, das sich in Kontakt mit mindestens einem Teil der Luftströmung sowie mit dem durch das Dosieraggregat geleiteten körnigen Gut befindet. Eine Drehzahl des rotierenden Förder-, Dosier- und/oder Vereinzelungselements ist für Reinigungszwecke und/oder im Zusammenhang mit einer Vorgewendesteuerung und/oder beim Starten oder Beenden eines Sä- oder Ausbringvorganges zumindest temporär um wenigstens fünf Prozent gegenüber einer regulären Betriebsdrehzahl, die während einer Ausbringfahrt eingestellt ist, reduzierbar oder erhöhbar. Das Steuersystem dient insbesondere der Durchführung des zuvor in verschiedenen Ausführungsvarianten dargestellten und beschriebenen Verfahrens.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Fig. 1 zeigt eine schematische Darstellung einer pneumatisch arbeitenden Sämaschine mit volumetrischer Dosierung des Saatgutes, das über einen Zentralverteiler zu einzelnen Saatleitungen mit mündungsseitig daran angeordneten Säscharen geführt wird.

Fig. 2 zeigt in einem schematischen Blockdiagramm einen von einer normalen Ausbringfahrt abweichenden Betriebsmodus, der einer Reinigung eines Dosieraggregats dient.

Fig. 3 zeigt in einem weiteren schematischen Blockdiagramm einen von einer normalen Ausbringfahrt abweichenden Betriebsmodus, der insbesondere nach einer Vorgewendefahrt oder am Beginn einer Ausbringfahrt anzuwenden ist.

Fig. 4 zeigt in einem weiteren schematischen Blockdiagramm einen von einer normalen Ausbringfahrt abweichenden Betriebsmodus, der einer Entleerung eines Dosieraggregats nach einer Ausbringfahrt oder kurz vor Erreichen eines Vorgewendes dient.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße System oder das erfindungsgemäße Verfahren ausgestaltet sein können und stellen keine abschließende Begrenzung dar.

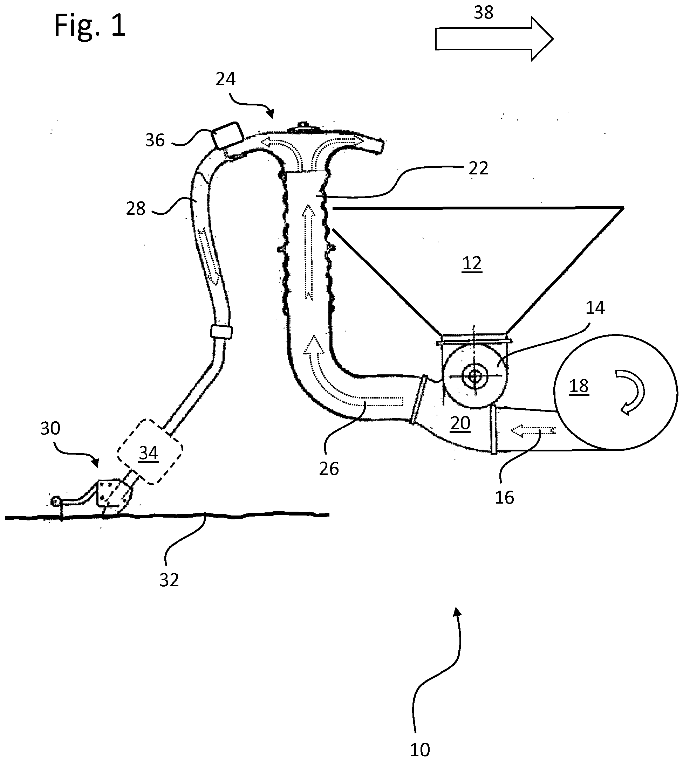

Die schematische Darstellung der Fig. 1 zeigt eine pneumatisch arbeitende Sämaschine 10, die das Saatgut volumendosiert und in regelmäßigen Reihen ausbringt. Die Sämaschine 10 wird im vorliegenden Zusammenhang auch als Verteil- und/oder Sävorrichtung bezeichnet. Bei der gezeigten Sämaschine 10 bzw. Verteil- und/oder Sävorrichtung wird das zu verteilende körnige Gut bzw. Saatgut über einen Zentralverteiler zu den einzelnen Saatleitungen mit jeweils mündungsseitig daran angeordneten Säscharen geführt. Die in ihrem grundlegenden Aufbau aus dem Stand der Technik bekannte Sämaschine 10 weist typischerweise einen trichterförmigen Vorratsbehälter 12 mit körnigem Gut, insbesondere mit Saatgut, ggf. auch mit Dünger auf, an dessen Unterseite sich mindestens eine Dosiereinrichtung 14 befindet, die das körnige Gut bzw. das Saatgut in einen Luftstrom 16 dosiert, der von einem Gebläse 18 erzeugt und in eine Luftleitung 20 befördert wird, die zu einem senkrecht angeordneten oder zumindest abschnittsweise annähernd vertikal verlaufenden Steigrohr 22 führt. An einer Oberseite des Steigrohrs 22 - dies kann insbesondere ein sog. Wellrohr o. dgl. sein - befindet sich ein Zentralverteiler 24, der den körnertragenden Luftstrom 26 möglichst bzw. weitgehend gleichmäßig zu einer Vielzahl von Saatleitungen 28 verteilt und insbesondere gleichmäßig zwischen diesen Leitungen 28 aufteilt.

Die einzelnen Saatleitungen 28, von denen der besseren Übersichtlichkeit halber nur eine einzelne dargestellt ist, münden schließlich jeweils an den einzelnen Säscharen 30, mit denen das Saatgut (bzw. das körnige Gut oder der Dünger) in den Ackerboden 32 eingebracht wird. Die Zudosierung des vom Vorratsbehälter 12 in den Luftstrom 16 abgegebenen Saatgutes oder körnigen Gutes kann wahlweise nach dem Venturi-Prinzip oder auch durch Unterstützung des unter Druck stehenden, im geschlossenen Drucktank 12 befindlichen Saatgutes erfolgen.

Wie es das Ausführungsbeispiel der Fig. 1 verdeutlicht, befindet sich innerhalb der Saatleitung 28, typischerweise in unmittelbarer Nähe zum Säschar 30, ein Dosieraggregat 34 im Sinne des erfindungsgemäßen Verfahrens, das für eine Beaufschlagung des Säschars 30 mit körnigem Gut bzw. mit Saatgut sorgt, welches durch die Einwirkung des Dosieraggregats 34 in annähernd gleichen Kornabständen und mit jeweils weitgehend gleichen Fördergeschwindigkeiten in den Ackerboden 32 abgegeben wird. Da bei einer realen Sämaschine eine Vielzahl solcher paralleler Säschare 30 vorgesehen ist (z.B. zwölf, sechzehn, zwanzig, vierundzwanzig, zweiunddreißig oder mehr), die jeweils mit separaten Saatleitungen 28 verbunden und von diesen jeweils versorgt sind, ist auch eine entsprechende Anzahl von jeweils gleichartig aufgebauten Dosieraggregaten 34 vorgesehen, da jede einzelne Saatleitung 28 ein solches Dosieraggregat 34 aufweist.

Der Aufbau des Dosieraggregats 34 und seine Funktionsweise kann insbesondere dem Dosieraggregat entsprechen, wie es in der WO 2015/015005 A1 im Detail beschrieben ist. Dort wird das durch eine Luftströmung getragene und beförderte körnige Gut bzw. Saatgut durch eine Zuführleitung in das Dosieraggregat 34 geleitet, dort in einem ungefähr kreisbogenförmigen Verlauf geführt und tangential an eine sich an das Dosieraggregat 34 anschließende Ausgangsleitung übergeben, die normalerweise in kurzer Distanz in das Säschar 30 mündet. Die durch die Ausgangsleitung geführte und das annähernd äquidistant beförderte Saatgut oder körnige Gut tragende und fördernde Luftströmung wird innerhalb des Dosieraggregats 34 mittels wenigstens einer ungefähr konzentrisch innerhalb des Dosieraggregats 34 rotierenden, elektromotorisch mit regelbarer Drehzahl angetriebenen Förder- oder Fächerscheibe (nicht gezeigt) gefördert und/oder beschleunigt. Die Ausgestaltung des Dosieraggregats kann wahlweise bspw. dem in EP 2 832 200 A1 offenbarten Dosieraggregat oder auch dem in DE 10 2012 105 048 A1 offenbarten Dosieraggregat entsprechen.

Es sei an dieser Stelle ergänzend darauf hingewiesen, dass die in Fig. 1 als Luftströmung 26 bezeichnete Förderluft, die vom Gebläse 18 erzeugt wird, und der mittels der Dosiereinrichtung 14 Körner, Saatgut, Dünger etc. aus dem Vorratsbehälter 12 zudosiert wird, auch im weiteren Strömungsverlauf durch die Steigleitung 22, durch den Zentralverteiler 24, bei Passieren des optionalen Sensors 36 bzw. der Sensoren 36 sowie bei der weiteren Förderung durch das Dosieraggregat 34 bzw. durch die Dosieraggregate 34, die sich in den jeweiligen Saatleitungen 28 in unmittelbarer Nähe vor den Säscharen 30 befinden, als Luftstrom 26 bzw. als körnertragender Luftstrom 26 bezeichnet wird, auch wenn der durch die Steigleitung 22 geförderte Luftstrom 26 im weiteren Förderverlauf durch den Zentralverteiler 24 auf die Mehrzahl von Saatleitungen 28 aufgeteilt wurde.

Vorzugsweise kann in zumindest einer der Saatleitungen 28, insbesondere in einem Bereich, der sich unmittelbar an den Zentralverteiler 24 anschließt, ein Sensor 36 zur Erfassung der innerhalb definierter Zeiträume durch die Saatleitung 28 geförderte Körner angeordnet sein, dessen Ausgangssignale zur Steuerung der Sämaschine 10 und/oder der jeweiligen Dosieraggregate 34 eingesetzt werden können. Es können auch mehrere solcher Sensoren 36 in verschiedenen Saatleitungen 28 vorhanden sein; wahlweise kann auch jeder Saatleitung 28 jeweils ein separater Sensor 36 zugeordnet sein. Die Sensoren 36 können bspw. als optisch oder als induktiv arbeitende Sensoren ausgestaltet sein. Als Sensoren 36 zur Erfassung der geförderten Kornmengen können auch piezoelektrisch arbeitende Prallsensoren o. dgl. eingesetzt werden.

Weiterhin kann die Sämaschine 10 und/oder ein die Sämaschine 10 bewegendes Zugfahrzeug (nicht gezeigt) mit einem geeigneten Sensor bzw. mit geeigneten Einrichtungen zur Erfassung einer Fahrgeschwindigkeit 38 ausgestattet sein, da diese Fahrgeschwindigkeit 38 insbesondere im Zusammenhang mit den vom Sensor 36 je Zeiteinheit erfassten Körnermengen zur Regelung der Sämaschine 10 und/oder deren Dosieraggregate 34, wahlweise auch des Gebläses 18 sowie der Dosiereinrichtung 14 ausgewertet werden kann.

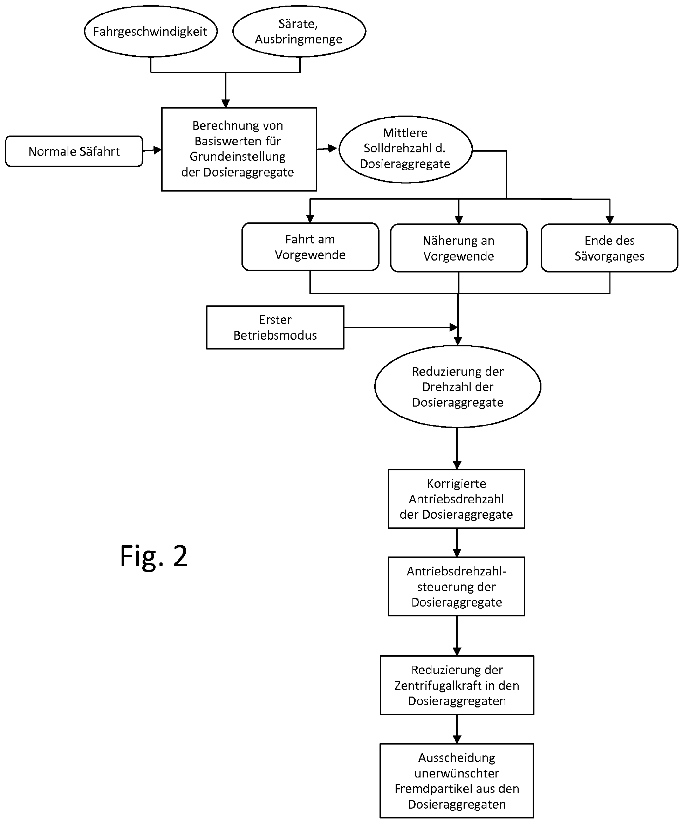

Die Figuren 2 bis 4 zeigen anhand von schematischen Blockdiagrammen verschiedene Verfahrensvarianten und Betriebsmodi des in Fig. 1 schematisch angedeuteten Dosieraggregats 34 im Zusammenhang mit der Funktionsweise der Sämaschine 10 bzw. der in Fig. 1 gezeigten Verteil- und/oder Sävorrichtung 10. Das in seinem Aufbau hier nicht näher gezeigte Dosieraggregat 34 kann insbesondere Teil der Verteil- und/oder Sävorrichtung 10 sein, wie sie bereits anhand der Fig. 1 beschrieben wurde. Das Dosieraggregat 34 ist in wenigstens einer von mehreren Saatleitungen 28, typischerweise jedoch in allen Saatleitungen 28 angeordnet. Das Dosieraggregat 34 bzw. jedes dieser Dosieraggregate 34 dient der Dosierung, Vereinzelung und/oder Vergleichmäßigung von körnigem Gut und wird zu diesem Zweck mit einer das körnige Gut transportierenden Luftströmung beaufschlagt und zumindest von einem Teil der Luftströmung durchströmt. Im Dosieraggregat 34 ist ein rotierendes Förder- und/oder Dosier- und/oder Vereinzelungselement angeordnet, das sich in Kontakt mit mindestens einem Teil der Luftströmung sowie mit dem durch das Dosieraggregat 34 geleiteten körnigen Gut befindet. Normalerweise weist das rotierende Förder- und/oder Dosier- und/oder Vereinzelungselement einen in seiner Drehzahl regulierbaren elektromotorischen Antrieb auf; es kann jedoch auch einen hydraulischen oder auf andere Weise funktionierenden Antrieb aufweisen, der es erlaubt, die Drehzahl des rotierenden Förder-, Dosier- und/oder Vereinzelungselements in gewünschter Weise zu regulieren.

Die Drehzahl des rotierenden Förder-, Dosier- und/oder Vereinzelungselements ist für Reinigungszwecke, im Zusammenhang mit einer Vorgewendesteuerung sowie auch beim Starten oder Beenden eines Sä- oder Ausbringvorganges zumindest temporär gegenüber einer regulären Betriebsdrehzahl, die während einer Ausbringfahrt eingestellt ist, reduzierbar oder steigerbar.

Das Blockschaltbild der Fig. 2 zeigt einen ersten Betriebsmodus bzw. einen Reinigungsmodus, der insbesondere der Beseitigung von Fremdstoffen aus dem Dosieraggregat 34 dienen kann. Während eines normalen Säbetriebs wird das rotierende Förder-, Dosier- und/oder Vereinzelungselement mit einer Solldrehzahl betrieben, bspw. mit einer Drehzahl im Bereich von ca. 1200 min⁻¹ bis ca. 1800 min⁻¹, bei der bezogen auf eine bestimmte Fahrgeschwindigkeit 38 der Sämaschine 10 (vgl. Fig. 1) eine gewünschte Kornzahl je gegebener Strecke ausgebracht wird. Die Körner werden hierbei in weitgehend konstanten Abständen ausgebracht, da es sich um einen Einzelkornsävorgang bzw. um einen Sävorgang handelt, der einer Einzelkornsaat sehr weitgehend angenähert ist. Fährt bzw. bewegt sich die Sämaschine 10 über einem Vorgewende, so wird die Drehzahl des rotierenden Förder-, Dosier- und/oder Vereinzelungselements auf einen geringeren Wert von bspw. ca. 300 min⁻¹ reduziert, wodurch sich im Inneren des Dosieraggregats 34 die auf die Körner sowie auf Fremdstoffe, Schmutzpartikel, Bruchkörner etc. wirkenden Zentrifugalkräfte reduzieren. Die Drehzahl wird soweit verringert, dass die Zentrifugalkräfte einen Wert annehmen, dass die unerwünschten Fremdstoffe über die Vereinzelungsöffnungen der Dosierscheibe vereinzelt und somit zumindest weitestgehend aus dem Einzelkorndosieraggregat 34 ausgeschieden werden.

Der Reinigungsmodus kann insbesondere während einer Vorgewendefahrt, bei der Annäherung an ein Vorgewende, aber auch am Ende eines Sävorganges durchgeführt werden.

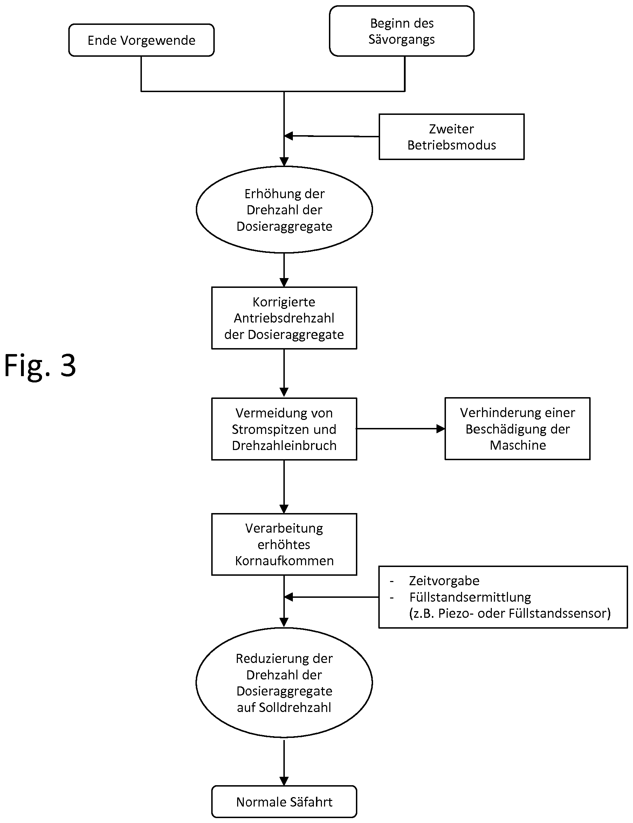

Das Blockdiagramm der Fig. 3 zeigt einen zweiten Betriebsmodus bzw. einen Modus nach einer Vorgewendefahrt, bei dem die Drehzahl zur Vermeidung von Beschädigungen beim Einsetzen der Maschine 10 kurzzeitig deutlich erhöht wird. Da die rotierende Dosierscheibe jedes Dosieraggregats 34 normalerweise mittels Elektromotor angetrieben wird, kann die plötzliche Zuführung größerer Mengen von Saatgut oder Dünger, wie sie insbesondere nach einer Vorgewendefahrt stattfindet, zu einer erhöhten Stromaufnahme durch das plötzliche Abbremsen des Antriebsmotors führen, was unter ungünstigen Umständen zu einer Beschädigung des Antriebsmotors führen kann. Um dies zu vermeiden, wird in diesem zweiten Betriebsmodus, der normalerweise unmittelbar nach der Vorgewendefahrt, aber auch bei Arbeitsbeginn, d.h. beim Starten des Sävorganges sinnvoll anzuwenden ist, die Drehzahl der Dosierscheibe vorbeugend um ein bestimmtes Maß erhöht, um somit auftretende Stromspitzen bzw. einen Einbruch der Drehzahl zu vermeiden. Nach einer bestimmten Zeit, wenn das erhöhte Kornaufkommen verarbeitet ist, kann die Drehzahl wieder auf die Solldrehzahl verringert werden.

Die Erhöhung der Drehzahl in diesem zweiten Betriebsmodus kann insbesondere mindestens fünf Prozent, normalerweise jedoch etwa mindestens fünfzehn bis dreißig Prozent gegenüber der normalen Betriebsdrehzahl betragen, ggf. auch etwas mehr oder etwas weniger. Wenn deshalb zuvor davon die Rede war, dass das rotierende Förder-, Dosier- und/oder Vereinzelungselement während eines normalen Säbetriebs mit einer Solldrehzahl von ca. 1200 min⁻¹ betrieben wird, so kann die Drehzahl im zweiten Betriebsmodus (Ende der Vorgewendefahrt oder Beginn des Sävorganges) auf einen je nach Betriebssituation sinnvollen Wert von etwa 1380 min⁻¹ (+ 15%) bis etwa 1560 min⁻¹ (+ 30%) angehoben werden. Wenn dagegen das rotierende Förder-, Dosier- und/oder Vereinzelungselement während eines normalen Säbetriebs mit einer Solldrehzahl von ca. 1500 min⁻¹ betrieben wird, so kann die Drehzahl im zweiten Betriebsmodus (Ende der Vorgewendefahrt oder Beginn des Sävorganges) auf einen je nach Betriebssituation sinnvollen Wert von etwa 1725 min⁻¹ (+ 15%) bis etwa 1950 min⁻¹ (+ 30%) angehoben werden. Wenn das rotierende Förder-, Dosier- und/oder Vereinzelungselement während eines normalen Säbetriebs allerdings mit einer Solldrehzahl von ca. 1800 min⁻¹ betrieben wird, so kann die Drehzahl im zweiten Betriebsmodus (Ende der Vorgewendefahrt oder Beginn des Sävorganges) auf einen je nach Betriebssituation sinnvollen Wert von etwa 2070 min⁻¹ (+ 15%) bis etwa 2340 min⁻¹ (+ 30%) angehoben werden. Selbstverständlich sind auch beliebige Zwischenwerte sinnvoll bzw. möglich.

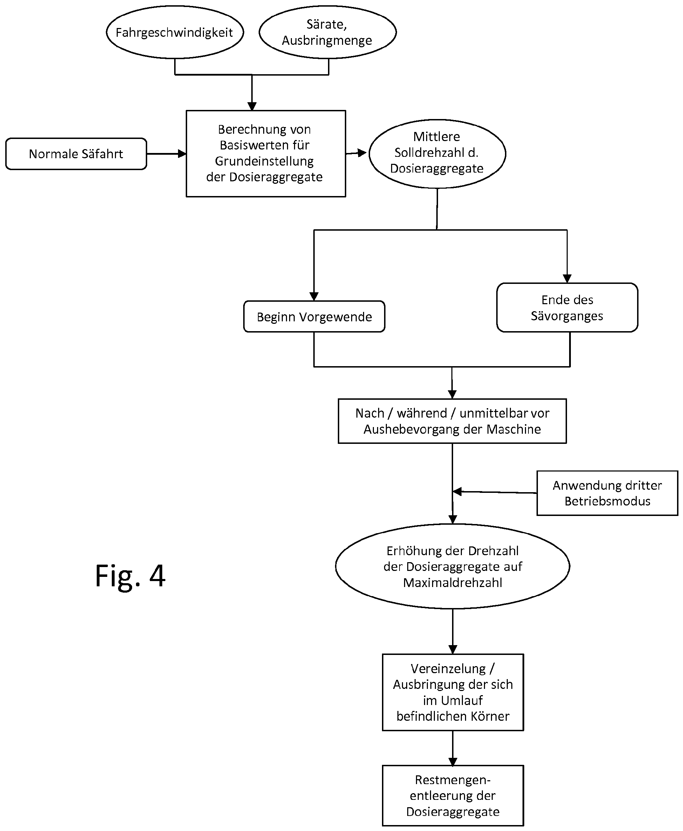

Das schematische Blockdiagramm der Fig. 4 zeigt einen dritten Betriebsmodus, der insbesondere einer Restmengenentleerung des Dosieraggregats 34 am Vorgewende oder am Ende eines Sävorganges dient. Um zu vermeiden, dass Körner bzw. Saatgut am Vorgewende oder am Ende der Arbeit noch dosiert werden, ist eine rechtzeitige Restmengenentleerung notwendig. Diese Restmengenentleerung wird gemäß Fig. 4 dadurch realisiert, dass nach dem Ausheben bzw. während des Aushebens der Maschine, d.h. nach dem eigentlichen Sävorgang, die Drehzahl des rotierenden Förder-, Dosier- und/oder Vereinzelungselements kurzzeitig auf eine vom Antriebsmotor realisierbare Maximaldrehzahl erhöht wird, wodurch die sich im Umlauf befindlichen Körner entsprechend vereinzelt bzw. ausgebracht werden können. Die Drehzahl kann hierbei bspw. kurzzeitig auf eine Maximaldrehzahl, die bspw. ca. 2500 min⁻¹ bis etwa 2800 min⁻¹ oder etwas mehr betragen kann, erhöht werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen. Der Schutzbereich wird durch die beigefügten Ansprüche definiert.

### Bezugszeichenliste

- 10: Sämaschine, pneumatisch arbeitende Sämaschine, Verteil- und/oder Sävorrichtung
- 12: Vorratsbehälter
- 14: Dosiereinrichtung
- 16: Luftstrom
- 18: Gebläse
- 20: Luftleitung
- 22: Steigrohr, Wellrohr
- 24: Zentralverteiler
- 26: Luftstrom, körnertragender Luftstrom
- 28: Saatleitung, Saatleitungen
- 30: Säschar
- 32: Ackerboden
- 34: Dosieraggregat
- 36: Sensor
- 38: Fahrgeschwindigkeit

## Patentansprüche

1. Verfahren zur Dosierung von körnigem Gut, insbesondere im Zusammenhang mit einem Verteil- und/oder Säverfahren, bei dem das mittels einer Luftströmung (26) beförderte körnige Gut durch wenigstens ein in einer von mehreren Saatleitungen (28) sich befindliches Dosieraggregat (34) vereinzelt und/oder vergleichmäßigt und mit annähernd gleichmäßigen Kornabständen an eine Ausgangsleitung oder ein Saatrohr bzw. ein Sä- oder Düngerschar (30) weitergeleitet wird, wobei im Dosieraggregat (34) ein motorisch angetriebenes und rotierendes Förder- und/oder Dosier- und/oder Vereinzelungselement angeordnet ist, das sich in Kontakt mit mindestens einem Teil der Luftströmung (26) sowie mit dem durch das Dosieraggregat (34) geleiteten körnigen Gut befindet, **dadurch gekennzeichnet, dass** eine Drehzahl des rotierenden Förder-, Dosier- und/oder Vereinzelungselements für Reinigungszwecke und/oder im Zusammenhang mit einer Vorgewendesteuerung und/oder beim Starten oder Beenden eines Sä- oder Ausbringvorganges zumindest temporär um wenigstens fünf, vorzugsweise um wenigstens fünfzehn bis dreißig Prozent gegenüber einer regulären Betriebsdrehzahl, die während einer Ausbringfahrt eingestellt ist, reduziert oder erhöht wird,
wobei mittels der kurzzeitigen Erhöhung der Drehzahl des rotierenden Förder-, Dosier- und/oder Vereinzelungselements oder mittels der kurzzeitigen Reduzierung der Drehzahl des rotierenden Förder-, Dosier- und/oder Vereinzelungselements jeweils Restmengen an körnigem Gut und/oder an Fremdstoffen und/oder Verunreinigungen aus dem Dosieraggregat (34) entleert werden.

2. Verfahren nach Anspruch 1, bei dem die Drehzahl des rotierenden Förder-, Dosier- und/oder Vereinzelungselements im Zusammenhang mit einer Vorgewendesteuerung zumindest temporär um wenigstens fünfzehn Prozent gegenüber einer regulären Betriebsdrehzahl, die während einer Ausbringfahrt eingestellt ist, erhöht wird.

3. Verfahren nach Anspruch 2, bei dem die Drehzahl des rotierenden Förder-, Dosier- und/oder Vereinzelungselements zumindest kurzzeitig auf eine Maximaldrehzahl gebracht wird.

4. Verfahren nach Anspruch 1, bei dem die Drehzahl des rotierenden Förder-, Dosier- und/oder Vereinzelungselements im Zusammenhang mit einem Arbeitsbeginn und/oder einer Weiterfahrt nach Passieren eines Vorgewendes zumindest temporär um wenigstens fünf bis fünfzehn Prozent gegenüber einer regulären Betriebsdrehzahl, die während einer Ausbringfahrt eingestellt ist, erhöht wird.

5. Verfahren nach Anspruch 4, bei dem nach der kurzzeitigen Erhöhung der Drehzahl nach dem Arbeitsbeginn oder nach dem Passieren des Vorgewendes die Drehzahl des rotierenden Förder-, Dosier- und/oder Vereinzelungselements wieder auf eine Solldrehzahl bzw. die reguläre Betriebsdrehzahl für eine Ausbringfahrt reduziert wird.

6. Verfahren nach Anspruch 1, bei dem die Drehzahl des rotierenden Förder-, Dosier- und/oder Vereinzelungselements während einer Vorgewendefahrt zumindest temporär um wenigstens zwanzig Prozent gegenüber einer regulären Betriebsdrehzahl, die während einer Ausbringfahrt eingestellt ist, reduziert wird.

7. Verfahren nach Anspruch 5 oder 6, bei dem die Drehzahl bzw. die Zentrifugalkraft des rotierenden Förder-, Dosier- und/oder Vereinzelungselements soweit verringert wird, dass diese einen Wert annimmt, dass Fremdkörper wie Schmutzpartikel, Bruchkorn o. dgl. Fremdstoffe über die Vereinzelungsöffnungen einer Dosierscheibe vereinzelt werden.

8. Steuersystem für wenigstens ein Dosieraggregat (34) einer Verteil- und/oder Sävorrichtung (10), das in wenigstens einer von mehreren Saatleitungen (28) zur Dosierung, Vereinzelung und/oder Vergleichmäßigung von körnigem Gut angeordnet ist und das mit einer das körnige Gut transportierenden Luftströmung (26) beaufschlagt und zumindest von einem Teil der Luftströmung (26) durchströmt wird, wobei im Dosieraggregat (34) ein durch motorischen Antrieb rotierendes Förder- und/oder Dosier- und/oder Vereinzelungselement angeordnet ist, das sich in Kontakt mit mindestens einem Teil der Luftströmung (26) sowie mit dem durch das Dosieraggregat (34) geleiteten körnigen Gut befindet **dadurch gekennzeichnet, dass** das Steuersystem eine Drehzahl des rotierenden Förder-, Dosier- und/oder Vereinzelungselements für Reinigungszwecke und/oder im Zusammenhang mit einer Vorgewendesteuerung und/oder beim Starten oder Beenden eines Sä- oder Ausbringvorganges zumindest temporär um wenigstens fünf Prozent gegenüber einer regulären Betriebsdrehzahl, die während einer Ausbringfahrt eingestellt ist, reduziert oder erhöht, wobei mittels der von dem Steuersystem eingestellten kurzzeitigen Erhöhung der Drehzahl des rotierenden Förder-, Dosier- und/oder Vereinzelungselements oder mittels der von dem Steuersystem eingestellten kurzzeitigen Reduzierung der Drehzahl des rotierenden Förder-, Dosier- und/oder Vereinzelungselements jeweils Restmengen an körnigem Gut und/oder an Fremdstoffen und/oder Verunreinigungen aus dem Dosieraggregat (34) entleert werden.

9. Steuersystem nach Anspruch 8 zur Durchführung eines Verfahrens gemäß einem der Ansprüche 1 bis 7.

## Claims

1. A method for metering granular material, in particular, in connection with a distribution method and/or sowing method, in which method the granular material that is being conveyed by an airflow (26) is conducted in a separated and/or equalized manner with approximately regularly spaced-apart grains through at least one metering unit (34) located in one of a plurality of seed tubes (28) to an outlet tube or a seed tube or, as applicable, to a seed coulter or fertilizer coulter (30), wherein a motor-driven and rotating conveying element and/or metering element and/or separating element is arranged in the metering unit (34), which conveying element and/or metering element and/or separating element is in contact with at least a part of the airflow (26) as well as with the granular material that is being conveyed through the metering unit (34), **characterised in that**, for cleaning purposes and/or in connection with a headland control and/or when starting or completing a sowing process or spreading process, a rotation speed of the rotating conveying element and/or metering element and/or separating element is reduced or increased at least temporarily by at least five, preferably by at least fifteen to thirty percent in relation to a regular operating rotation speed as is set for a spreading drive,
wherein residual amounts of granular material and/or foreign substances and/or impurities are emptied from the metering unit (34), in each case by the brief increase of the rotation speed of the rotating conveying element and/or metering element and/or separating element or by the brief reduction of the rotation speed of the rotating conveying element and/or metering element and/or separating element.

2. The method according to claim 1, in which, in connection with a headland control, the rotation speed of the rotating conveying element and/or metering element and/or separating element is increased at least temporarily by at least fifteen percent in relation to a regular operating rotation speed as is set for a spreading drive.

3. The method according to claim 2, in which the rotation speed of the rotating conveying element and/or metering element and/or separating element is at least briefly brought to a maximum rotation speed.

4. The method according to claim 1, in which, in connection with starting work and/or continuing a drive after a headland turn, the rotation speed of the rotating conveying element and/or metering element and/or separating element is increased at least temporarily by at least five to fifteen percent in relation to a regular operating rotation speed as is set for a spreading drive.

5. The method according to claim 4, in which, following the brief increase of the rotation speed after starting work or after a headland turn, the rotation speed of the rotating conveying element and/or metering element and/or separating element is reduced back to a set rotation speed or, as applicable, to the regular operating rotation speed for a spreading drive.

6. The method according to claim 1, in which, during a headland turn, the rotation speed of the rotating conveying element and/or metering element and/or separating element is reduced at least temporarily by at least twenty percent in relation to a regular operating rotation speed as is set for a spreading drive.

7. The method according to claim 5 or 6, in which the rotation speed or, as applicable, the centrifugal force of the rotating conveying element and/or metering element and/or separating element is reduced so far that it assumes a value that foreign matter such as dirt particles, broken grains, or the like foreign substances are separated via the separation apertures of a metering disc.

8. A control system for at least one metering unit (34) of a distribution device and/or sowing device (10), which control system is arranged in at least one of a plurality of seed tubes (28) for metering, separating, and/or equalizing granular material, and to which control system an airflow (26) transporting the granular material is applied, with at least a part of the airflow (26) passing through the control system, wherein a conveying element and/or metering element and/or separating element that rotates by motor drive is arranged in the metering unit (34), which conveying element and/or metering element and/or separating element is in contact with at least a part of the airflow (26) as well as with the granular material that is being conveyed through the metering unit (34), **characterised in that**, for cleaning purposes and/or in connection with a headland control and/or when starting or completing a sowing process or spreading process, the control system at least temporarily reduces or increases a rotation speed of the rotating conveying element and/or metering element and/or separating element by at least five percent in relation to a regular operating rotation speed as is set for a spreading drive,
wherein residual amounts of granular material and/or foreign substances and/or impurities are emptied from the metering unit (34), in each case by the brief increase of the rotation speed of the rotating conveying element and/or metering element and/or separating element as set by the control system or by the brief reduction of the rotation speed of the rotating conveying element and/or metering element and/or separating element as set by the control system.

9. The control system according to claim 8 for carrying out a method according to one of the claims 1 to 7.

## Revendications

1. Procédé de dosage de produits granuleux, notamment dans le cadre d'un procédé de distribution et/ou semeur, dans lequel le produit granuleux convoyé au moyen d'un courant d'air (26) est redirigé, par au moins un groupe doseur (34) se trouvant dans l'une de plusieurs conduites à semences (28), de manière individualisée et/ou uniformisée et à intervalles de grains approximativement égaux, vers une conduite de sortie ou à un tuyau à semences ou un soc pour semoir ou engrais (30), un organe de convoyage et/ou de dosage et/ou d'individualisation rotatif et entraîné par moteur étant agencé dans ledit groupe doseur (34), lequel organe se trouve en contact avec au moins une partie du courant d'air (26) ainsi qu'avec le produit granuleux dirigé au travers du groupe doseur (34), **caractérisé en ce qu'**une vitesse de rotation de l'organe rotatif de convoyage, de dosage et/ou d'individualisation est, à des fins de nettoyage et/ou dans le cadre d'une commande de tournière et/ou au démarrage ou à l'arrêt d'une opération de semage ou d'épandage, réduite ou augmentée, au moins temporairement, d'au moins cinq, de préférence d'au moins quinze à trente pour cent par rapport à une vitesse de rotation de marche normale telle que paramétrée au cours d'une manœuvre d'épandage,
l'augmentation de courte durée de la vitesse de rotation de l'organe rotatif de convoyage, de dosage et/ou d'individualisation ou la réduction de courte durée de la vitesse de rotation de l'organe rotatif de convoyage, de dosage et/ou d'individualisation permettant de vider le groupe doseur (34) des quantités résiduelles respectives de produits granuleux et/ou de matériaux étrangers et/ou d'impuretés.

2. Procédé selon la revendication 1, dans lequel la vitesse de rotation de l'organe rotatif de convoyage, de dosage et/ou d'individualisation étant, dans le cadre d'une commande de tournière, augmentée au moins temporairement d'au moins quinze pour cent par rapport à une vitesse de rotation de marche normale telle que paramétrée au cours d'une manœuvre d'épandage.

3. Procédé selon la revendication 2, dans lequel la vitesse de rotation de l'organe de convoyage, de dosage et/ou d'individualisation est amenée au moins temporairement à une vitesse de rotation maximale.

4. Procédé selon la revendication 1, dans lequel la vitesse de rotation de l'organe rotatif de convoyage, de dosage et/ou d'individualisation est, dans le cadre d'un démarrage du travail et/ou d'une poursuite de la manœuvre après avoir passé une tournière, augmentée au moins temporairement d'au moins cinq à quinze pour cent par rapport à une vitesse de rotation de marche normale telle que paramétrée au cours d'une manœuvre d'épandage.

5. Procédé selon la revendication 4, dans lequel après que la vitesse de rotation a été augmentée pour un court laps de temps après le démarrage du travail et après le passage de la routière, la vitesse de rotation de l'organe rotatif de convoyage, de dosage et/ou d'individualisation est réduite pour repasser à une vitesse de rotation de consigne ou à la vitesse de rotation normale d'une manœuvre d'épandage.

6. Procédé selon la revendication 1, dans lequel la vitesse de rotation de l'organe rotatif de convoyage, de dosage et/ou d'individualisation est, lors d'une manœuvre de tournière, réduite au moins temporairement d'au moins vingt pour cent par rapport à une vitesse de rotation de marche normale telle que paramétrée au cours d'une manœuvre d'épandage.

7. Procédé selon la revendication 5 ou 6, dans lequel la vitesse de rotation ou la force centrifuge de l'organe rotatif de convoyage, de dosage et/ou d'individualisation est diminuée pour atteindre une valeur telle que les corps étrangers tels que particules sales, grains cassés ou similaires sont individualisés par les ouvertures d'individualisation d'un disque doseur.

8. Système de commande pour au moins un groupe doseur (34) d'un dispositif de distribution et/ou semeur (10) qui est agencé dans au moins l'une de plusieurs conduites à semences (28) pour le dosage, l'individualisation et/ou l'homogénéisation de produits granuleux et auquel est appliqué un courant d'air (26) convoyant les produits granuleux et qui est traversé au moins par une partie du courant d'air (26), un organe de convoyage et/ou de dosage et/ou d'individualisation, rotatif et entraîné par moteur, étant agencé dans ledit groupe doseur (34), lequel organe est en contact avec au moins une partie du courant d'air (26) ainsi qu'avec le produit granuleux dirigé au travers du groupe doseur (34), **caractérisé en ce que** le système de commande réduit ou augmente une vitesse de rotation de l'organe rotatif de convoyage, de dosage et/ou d'individualisation à des fins de nettoyage et/ou dans le cadre d'une commande de tournière et/ou au démarrage ou à l'arrêt d'une opération de semage ou d'épandage, au moins temporairement, d'au moins cinq pour cent par rapport à une vitesse de rotation de marche normale telle que paramétrée au cours d'un trajet d'épandage,
l'augmentation de courte durée de la vitesse de rotation dudit organe rotatif de convoyage, de dosage et/ou d'individualisation paramétrée par le système de commande, ou la réduction de courte durée de la vitesse de rotation dudit organe rotatif de convoyage, de dosage et/ou d'individualisation paramétrée par le système de commande permettant de vider le groupe doseur (34) des quantités résiduelles respectives de produits granuleux et/ou de matériaux étrangers et/ou d'impuretés.

9. Système de commande selon la revendication 8, destiné à exécuter un procédé selon l'une quelconque des revendications 1 à 7.
